(19) Europäisches Patentamt
European Patent Office
Office européen des brevets

(11) **EP 0 458 274 B1**

(12) **EUROPEAN PATENT SPECIFICATION**

(45) Date of publication and mention
of the grant of the patent:
**16.10.1996 Bulletin 1996/42**

(51) Int Cl.$^6$: **G01S 17/58**

(21) Application number: **91108201.4**

(22) Date of filing: **21.05.1991**

(54) **Apparatus and method for detecting an information of the displacement of an object.**

Vorrichtung und Verfahren zur Erfassung einer Information über die Verschiebung eines Gegenstands.

Appareil et méthode d'obtention d'une information de déplacement d'un objet.

(84) Designated Contracting States:
**DE FR GB IT NL**

(30) Priority: **21.05.1990 JP 130590/90**

(43) Date of publication of application:
**27.11.1991 Bulletin 1991/48**

(73) Proprietor: **CANON KABUSHIKI KAISHA**
**Tokyo (JP)**

(72) Inventors:
- **Takamiya, Makoto,**
  **c/o CANON KABUSHIKI KAISHA**
  **Tokyo (JP)**
- **Kadowaki, Hidejiro,**
  **c/o CANON KABUSHIKI KAISHA**
  **Tokyo (JP)**
- **Ishida, Yasuhiko,**
  **c/o CANON KABUSHIKI KAISHA**
  **Tokyo (JP)**
- **Sugiyama, Hiroshi,**
  **c/o CANON KABUSHIKI KAISHA**
  **Tokyo (JP)**

(74) Representative: **Kinne, Reinhard, Dipl.-Ing. et al**
**Patentanwaltsbüro**
**Tiedtke-Bühling-Kinne & Partner**
**Bavariaring 4**
**80336 München (DE)**

(56) References cited:
**EP-A- 0 127 244      US-A- 4 697 922**

- **NUCLEAR INSTRUMENTS & METHODS IN PHYSICS RESEARCH./B vol. 40/41, no. II, April 1989, Amsterdam, NL, pp 1178-1181; W. G. DAVIES: 'The design of ion-optical systems for medical and industrial application'**

## Description

BACKGROUND OF THE INVENTION

The present invention relates to an apparatus and a method for detecting information of the displacement of an object. The present invention relates in particular to a velocimeter for measuring the velocity of a moving object which may be a fluid without contacting it, and moreover to a Doppler velocimeter for detecting velocity by detecting the frequency shift of light.

Traditionally, the laser Doppler velocimeter has been in use as an apparatus for performing a noncontact high-precision measurement of the traveling velocity of a moving object, for example a fluid. The laser Doppler velocimeter is an apparatus for measuring the traveling velocity of the moving object or fluid by the utilization of the effect (Doppler effect) that the frequency of scattering rays of light by the moving object or fluid is shifted in proportion to its traveling velocity when a laser beam is irradiated onto the moving object or fluid.

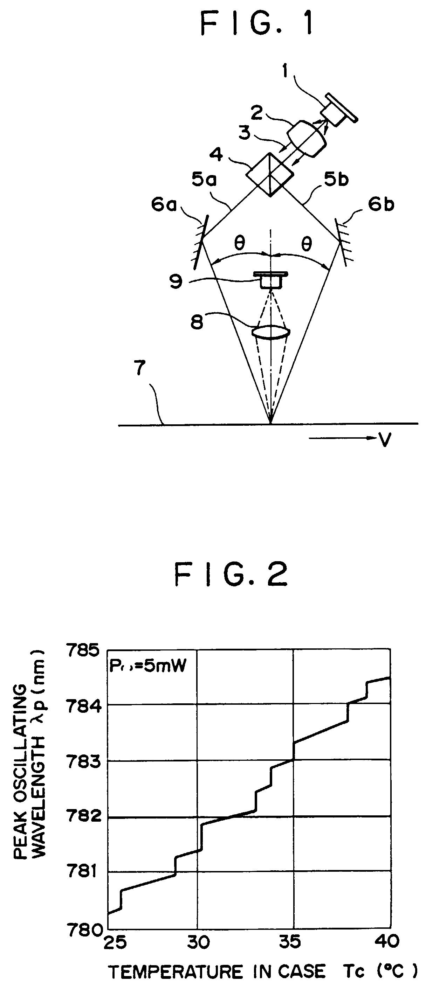

Fig. 1 is a view illustrating an example of a conventional laser Doppler velocimeter.

In Fig. 1, the laser light emitted from the laser light source 1 is produced into a parallel beam 3 by the function of the collimator lens 2, and splitted into two beams 5a and 5b by the beam splitter 4. The splitted beams 5a, 5b are reflected by the reflection mirrors 6a and 6b respectively and are irradiated at an incident angle θ by the two-beam irradiation onto one and a same position on a moving object or fluid 7 at a traveling velocity V. The scattering lights from the moving object at that time is detected by the photodetector 9 through the condenser lens 8. The frequency of the scattering rays of light by the two beams is proportional to the traveling velocity V and affected by the Doppler shift of + Δf and - Δf, respectively. Now, given the wavelength of the laser light as λ, the Δf can be expressed in an equation (1) given below.

$$\Delta f = V \sin (\theta)/\lambda \tag{1}$$

The scattering rays of light affected by the Doppler shifts +Δf and -Δf, interfere with each other to result in the variation of light intensity on the light receiving plane of the photodetector 9. Its frequency F is obtainable by an equation (2) given below.

$$F = 2 \Delta f = 2V \sin (\theta)/\lambda \tag{2}$$

With the measurement by the equation (2) of the frequency F (hereinafter referred to as Doppler frequency) of the photodetector 9, the traveling velocity V of the moving object 7 can be obtained.

In such a laser Doppler velocimeter as in the above example of the conventional art, the Doppler frequency F is inversely proportional to the laser wavelength λ as understandable from the equation (2). Therefore, it is necessary for the laser Doppler velocimeter to use a laser light source capable of emitting a light having stable wavelength. As a laser light source capable of continuous transmission with a stable wavelength, a gas laser such as He - Ne is often employed, but the size of its laser oscillator is large and a high voltage power source is needed. Accordingly, the apparatus becomes large and expensive. On the other hand, the laser diode (or semiconductor laser) employed for a compact disc, video disc, optical fiber communications or the like is very small and easy to drive. However, there is a problem of its temperature dependence.

Fig. 2 (quoted from Optical Semiconductor Devices compiled in Mitsubishi Semiconductor Data Book 1987) illustrates an example of the typical temperature dependence of a laser diode. The portion where the wavelength changes continuously is mainly caused by the temperature changes by the refractive index of the active layer of the laser diode, which is 0.05 to 0.06 nm/°C. The portion where the wavelength changes discontinuously is called longitudinal mode hopping, which is 0,2 to 0.3 nm/°C.

In order to stabilize the wavelength, a controlling method is usually adopted to maintain the laser diode at a constant temperature. Such method requires the installation of the temperature control members such as heater, radiator, and temperature sensor with small thermal resistance to control the temperature precisely. This makes the laser Doppler velocimeter comparatively large in its size and high in its cost in addition, it is still impossible to eliminate completely the unstableness resulting from the longitudinal mode hopping.

With a view to solving the above-mentioned problems, a method for detecting the scattering lights from a moving object or fluid by the use of a photodetector has been proposed in EP-A-391278 (Art. 54(3) EPC prior art document), as a laser Doppler velocimeter, in which the laser light as the light source is incident on a diffraction grating, and the two of the obtainable diffracted lights, which are +n order and -n order (n is 1, 2, and, ... except zero order, are irradiated onto the moving object at an intersecting angle which is the same angle formed by the two beams.

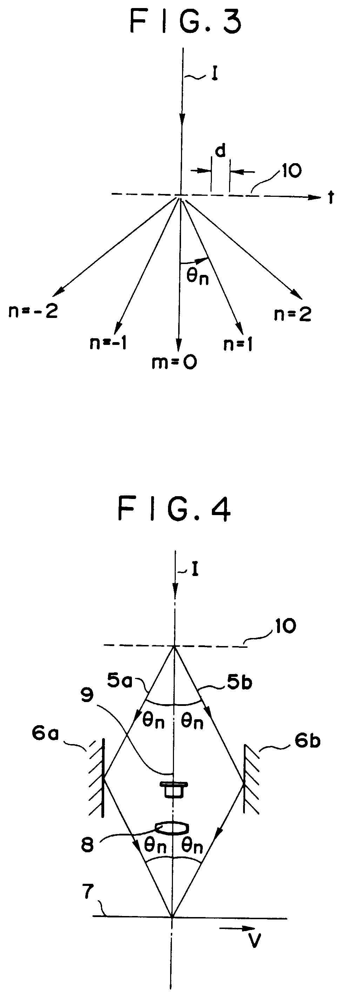

Fig. 3 illustrates an example of diffraction wherein a laser light I is incident on a transmission type diffraction grating 10 having a grating pitch d, perpendicularly to the direction in which the grating is arrayed, and the diffraction angle $\theta_n$ is expressed by an equation given below.

$$\sin \theta_n = m\ \lambda/d$$

where m is the diffraction order (0, 1, 2, and ... ) and $\lambda$ is the wavelength of light.

Here, the light of $\pm n$ order other than zero order is expressed by an equation given below.

$$\sin \theta_n = \pm n\ \lambda/d \tag{3}$$

where n is 1, 2, and ...

Fig. 4 is a view illustrating the two-beam irradiation of said $\pm n$ order light onto the moving object 7 by the use of the mirrors 6a and 6b in such a manner that its incident angle becomes $\theta_n$. The Doppler frequency F of the photodetector 9 is expressed by an equation given below, obtained from the equations (2) and (3):

$$F - 2V\sin \theta_n/\lambda = 2nV/d \tag{4}$$

The Doppler frequency F does not depend on the wavelength of the laser light I and is inversely proportional to the grating pitch d of the diffraction grating 10 and is proportional to the traveling velocity V of the object 7. Because the grating pitch d is sufficiently stable, the frequency proportional to only the traveling velocity V of the object 7 is obtainable as the Doppler frequency F. In this respect, when a reflection type diffraction grating is used as the grating 10, same result will be obtained.

The pre-characterizing clauses of claims 1 and 5 are based on the apparatus and method known from document EP-A-127244.

The optical means of this known apparatus comprises a first lens and a second lens which form an afocal system, i.e. the first and second lenses are positioned such that the image focal plane (back focal plane) of the first lens coincides with object focal plane (front focal plane) of the second lens. The diffraction grating of the optical means is positioned at the front focal plane of the first lens, and the object is positioned at the back focal plane of the second lens. It is an advantage of the known apparatus and method that due to the optical means for irradiating the beam onto the object the luminous energy losses are comparatively low and that the position of the spot which is formed by the beam on the object does not change when the wavelength of the irradiated light changes or fluctuates. This results in a comparatively high S/N ratio of the signal detected by the detecting means and, therefore, contributes to the measurement precision.

The installation and the operation of the known apparatus are easier when the working distance, i.e. the distance between the second lens and the object, is large. In order to make the working distance of the known apparatus large, it is necessary that the focal distance of the second lens is made large, whereby the distance between the two lenses is increased and the apparatus as a whole becomes comparatively long. Furthermore, fluctuations or variations of the wavelength $\lambda$ of the light emitted by the light source means result in variations or fluctuations of the Doppler shift $\Delta f = V \sin (\theta)/\lambda$, so that the Doppler shift varies even if the velocity V does not vary. Therefore, the measurement precision is degraded, because fluctuations of the wavelength $\lambda$ cannot be avoided unless the above mentioned complicated devices are provided to stabilize the wavelength.

It is an object of the invention to provide an apparatus the operativity of which is improved by making the working distance longer while at the same time allowing a high-precision detection. Furthermore, it is an object of the invention to provide a correspondingly improved method.

These objects are achieved by the apparatus according to claim 1 and by the method according to claim 5.

By the specific arrangement according to the invention, a large working distance is achieved without enlarging the focal distance of the second lens and without enlarging the total length of the apparatus. Furthermore, despite the fact that the object is not positioned at the image focal plane of the second lens, the position of the spot generated by the light beam on the object is invariant to wavelength fluctuations. Finally, the above mentioned Doppler shift $\Delta f$ is not changed by a fluctuation of the wavelength $\lambda$ because the value of the term $(\sin \theta/\lambda)$ is held constant by the specific optical means according to the invention.

BRIEF DESCRIPTION OF THE DRAWINGS

Fig. 1 is a view showing an example of the conventional laser Doppler velocimeter.

Fig. 2 is a graph showing an example of the temperature dependence of the oscillating frequency of a laser diode.

Fig. 3 is a view illustrating a diffraction grating.

Fig. 4 is a view illustrating a laser Doppler velocimeter using the diffraction grating.

Fig. 5 is a view illustrating the principle of the present invention.

Fig. 6 is a view illustrating an embodiment according to the present invention, and

Figs. 7A, 7B, and 7C are views showing the respective states of beam deviations.

DETAILED DESCRIPTION OF THE PREFERRED EMBODIMENTS

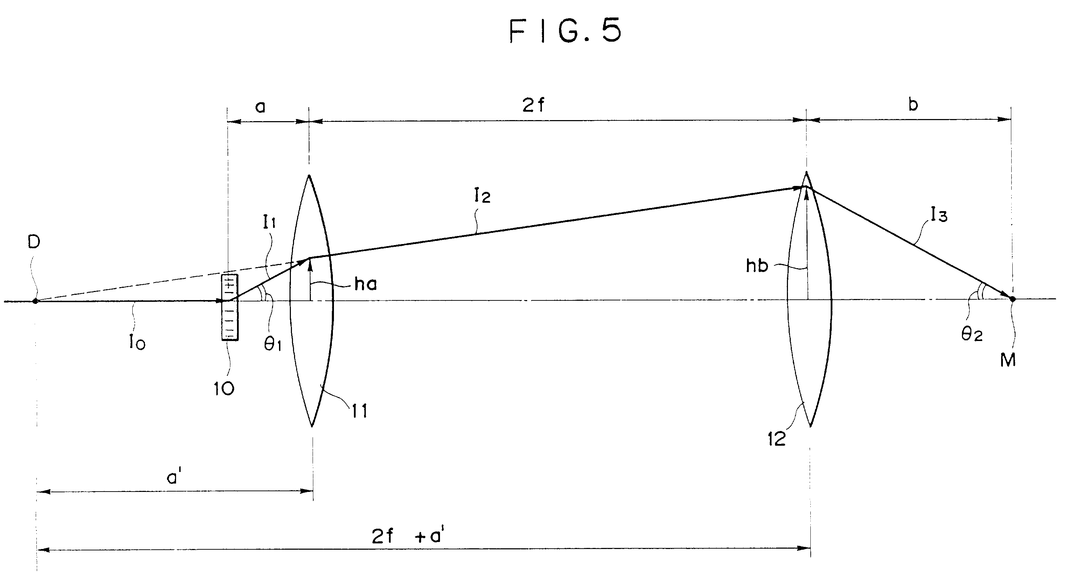

The principle of the present invention will be described in conjunction with Fig. 5, in which a reference numeral 10 designates the same diffraction grating as has been described earlier; 11 and 12, lenses having focal distance f; and $l_0$, $l_1$, $l_2$, and $l_3$ designate optical paths for the measuring beam. The lenses 11 and 12 are arranged apart by a distance 2f, and given the distance between the diffraction grating 10 and the lens 11 as "a", and the distance between the lens 12 and the measuring point M on a measuring object as "b", thereby obtain $a + b = 2f$. A reference mark D designates the virtual divergence origin and a reference mark "a'" designates the distance from D to the lens 11.

The laser light having a wavelength $\lambda$ is made by a collimator lens and others (not shown) to be parallel beam $l_0$ and incident on the transmission type diffraction grating 10 perpendicularly to the direction in which the grating 10 is arrayed. Then, the diffraction light $l_1$ is emitted at a diffraction angle $\theta_1$. When the beam $l_1$ is incident on the convex lens 11 having the focal distance f, a beam $l_2$ such as shown in Fig. 5 is obtained. When the beam $l_2$ is incident on another convex lens 12 arranged apart by 2f, the parallel beam $l_3$ is again obtained, which is irradiated onto the object at an incident angle which is the same as the diffraction angle $\theta_1$ from the diffraction grating (here, the incident angle is designated by a reference mark $\theta_2$).

In this respect, another diffraction light of different reference mark from the diffraction grating 10 intersects said beam at the measuring point M through an axisymmetric optical path, thereby forming the fringe thereon. In Fig. 5, however, the diffraction light of the different reference mark is omitted. The scattering rays of light from the object moving at a velocity V are detected by a detector (not shown), and the optical signals, which contain the Doppler signals expressed by an equation given below in accordance with the equation (2), are detected.

$$F = 2V\sin \theta_2/\lambda \qquad (6)$$

In this system, if the variation of the focal distance of the lenses caused by the wavelength fluctuation is neglected, the angle of emission (diffraction angle) $\theta_1$ of the diffracted beam $l_1$ and the angle of incidence $\theta_2$ onto the object maintain the relationship of $\theta_1 = \theta_2$ even when the diffraction angle is varied due to the wavelength fluctuation. Also, provided that the diffracted light is a light of n order, an equation given below can be established.

$$\sin \theta_1 = n \lambda/d \qquad (7)$$

Therefore, from the equations (6) and (7), an equation given below is obtained.

$$F = 2V\sin \theta_2/\lambda = 2V\sin \theta_1/\lambda = 2nV/d \qquad (8)$$

From the equation (8), it is apparent that the Doppler frequency which is not affected by the fluctuation of the wavelength is obtainable in this system. Since the term ($\sin \theta_2/\lambda$) is a constant value in this system, it is possible to obtain the Doppler frequency which is not affected by the wavelength fluctuation.

The influence of the varying angles of the diffraction due to the wavelength fluctuations of the lens group 6a and 6b, which has been neglected earlier, is taken into account. As the wavelength $\lambda$ changes by the temperatures as shown in Fig. 2, a wavelength fluctuation of approximately 10 nm should be considered at the time of applying the working temperature.

Now, for the two wavelengths $\lambda_1 = 780$ nm and $\lambda_2 = 790$ nm, if the lens material is given to be BK7, the refraction indices are $n_1 = 1.51118$ and $n_2 = 1.51098$, respectively, and in terms of the ratio of the focal distances,

$$f_1/f_2 = (n_1 - 1)/(n_2 - 1) \simeq 1.00039 \tag{9}$$

where $f_1$ and $f_2$ are the focal distances for the respective wavelengths.

Now, the distance between the lenses is established two times of the focal distance $f_2$ at $\lambda_2 = 790$ nm in Fig. 5. Then, with this arrangement if the wavelength $\lambda_2 = 790$ nm is taken into account, the result is $\sin\theta_1 = \sin\theta_2$ on condition that $a + b = 2f_2$ as described earlier.

Next, the wavelength $\lambda_1 = 780$ nm is taken into account in this arrangement. The $\theta_1$ and $\theta_2$ given below are the angles of this wavelength. The focal distance $f_1$ of the lens changes in accordance with the ratio expressed by the equation (9). Then, if the ray tracing of the beam $l_1$ is executed, the expression given below is established for the lens 11.

$$-\frac{1}{a'} + \frac{1}{a} = \frac{1}{f_1} \qquad \left(\begin{array}{c} a' > 0 \\ a > 0 \end{array}\right)$$

Also, the following equation is established:

$$d \sin \theta_1 = \lambda_1$$

where d is the grating pitch of the diffraction grating. By this equation, the angle $\theta_1$ is induced. Also, for the lens 12, the position of the beam $l_2$ on the axis, i.e., D, is $(2f_2 + a')$. Therefore,

$$\frac{1}{2f_2+a'} + \frac{1}{b} = \frac{1}{f_1} \qquad (b > 0)$$

On the other hand, the respective distances $h_a$ and $h_b$ of the incident position of beam on the lenses it and 12 from the optical axis become as follows:

$$h_a = a \tan \theta_1$$

$$h_b = h_a \left(\frac{2f_2+a'}{a'}\right)$$

Therefore, the angle $\theta_2$ is induced by an equation given below.

$$\theta_2 = \tan^{-1} (h_b/b)$$

In terms of the ratio of the Doppler signals:

$$F_1 = \frac{\sin \theta_2}{\sin \theta_1} F_2 \qquad \left(\begin{array}{l} F_1\text{: Doppler frequency at } \lambda_1 \\ F_2\text{: Doppler frequency at } \lambda_2 \end{array}\right)$$

Now, the angles $\theta_1$ and $\theta_2$ are obtained by assigning $f_2 = 30$ mm, $a = 10$ mm, and $d = 1.6$ $\mu$m, and are assigned to the above-mentioned equation. Then, the result is

$$F_1 = 0.99960 \cdot F_2$$

and the error is just 0.04 %. Now, if angles the $\theta_1$ and $\theta_2$ are obtained by assigning $f_2$ = 30 mm, a = 30 mm, and d = 1.6 μm, the result is:

$$F_1 = 0.99999977 \, F_2$$

This is also negligible as in the above case. In other words, it is safe to consider that the variation of the refraction index caused by the wavelength fluctuation of the lens of approximately 10 nm is substantially negligible. Said discussion is made for the influence of a single-piece lens, but the precision is further improved if a double-piece lens, the chromatic aberration of which has been corrected, is used, for example.

In this way, it can be deduced that the Doppler frequency is not affected substantially by the wavelength fluctuation. Also, in this system, the "a + b" does not change substantially even if the $\theta_1$ varies. As a result, the beam $l_3$ should always pass through the point M, and there is no substantial deviation generated by the wavelength fluctuation between the two beams intersecting each other at the point of measurement. Furthermore, the beam transmitted through the diffraction grating 10 is deflected by the lens system rather than an element such as diffraction grating which results in a considerable loss of luminous energy, therefore, it is possible to intensify the signal light with ease. Also, it is easy to form a wide area of parallel fringes on the intersecting point, because if parallel light is incident on the diffraction grating 10, the light emitted from the second lens 12 is necessarily parallel light since the distance between the lenses is 2f.

Subsequently, using a specific embodiment, the present invention will be described.

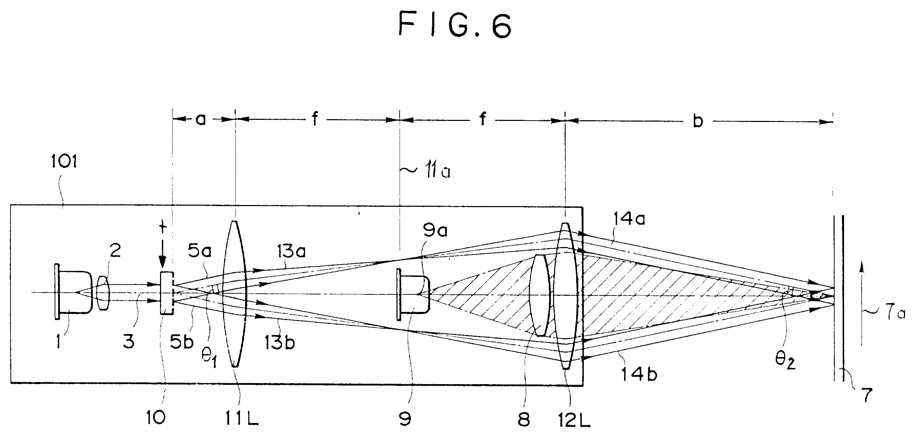

Fig. 6 is a view schematically showing the principal part of the optical system of an embodiment according to the present invention.

In Fig. 6, a reference numeral 101 designates a Doppler velocimeter; 1, a light source means comprising a laser diode, semiconductor, or the like, for example (hereinafter referred to as laser); 2, a collimator lens for producing a beam of parallel light 3 from the beam emitted from the laser 1; and 10, a transmission type diffraction grating which is arranged to diffract light of ± primary order having the grating pitch d.

The optical means which comprises the diffraction grating 10 further comprises an optical system comprising two single-piece convex lenses or lens groups 11L and 12L (hereinafter referred to as lens group), having a substantially same focal distance f, which are arranged with a space two times of the focal distance f. Reference numeral 7, designates a moving object or moving fluid (hereinafter referred to as moving object) in motion in the direction indicated by arrow 7a at a traveling velocity V.

The distances "a" and "b" satisfy the relationship of "a + b = 2f".

A reference numeral 8 designates a condenser lens which converges the scattering rays of light affected by the Doppler shift from the moving object 7 on the detecting surface 9a of an photodetector 9 functioning as detecting means. The surface of the moving object 7 and the detecting surface 9a make a substantially conjugate relationship.

A computing means such as an electronic computer (not shown) obtains the traveling velocity V of the moving object 7 using the Doppler signals obtained by the photodetector 9.

In the present embodiment, the laser light emitted from the laser 1 (laser diode, wavelength $\lambda$ = 0.68 μm) is produced by the collimator lens 2 into the parallel beam 3 of approximately 2 mm diameter, and is incident on the transmission type diffraction grating 10 perpendicularly to the direction t in which the grating 10 is arrayed. Then, the diffraction lights 5a and 5b of ± primary order are emitted at a diffraction angle $\theta_1$ = 12°. When the beams 5a and 5b are incident on the convex lens 11L having the focal distance f, such beams 13a and 13b as shown in Fig. 6 are obtained. When the beams 13a and 13b are incident on another convex lens 12L which is arranged at a position 2f away, the parallel beams 14a and 14b are again obtained, which are irradiated onto the object 7 as the spot diameters of 2 mm φ at the same angle $\theta_2$ as the diffraction angle $\theta_1$ from aforesaid diffraction grating (i.e. $\theta_1 = \theta_2$). Then, the scattering rays of light from the measuring object 7 are effectively converted by the convex lens 12L and a condenser lens 8 on the light receiving surface 9a of the photodetector 9 to detect the optical signal containing the Doppler signal expressed by the equation (10).

Here, if the wavelength $\lambda$ of the laser light fluctuates the diffraction angle $\theta_1$ of the diffraction light of a specific order also changes. At this juncture, however, the value of sin $\theta_2/\lambda$ is made to be constant by the system formation set forth earlier.

The two diffraction beams 14a and 14b are irradiated to intersect each other so that the spots thereof are overlapped on the surface of the moving object 7.

In the present embodiment, the focal distances f of the lens group 11L and the lens group 12L in the optical system are substantially equal, and the diffracting grating 10 and the moving object 7 are arranged so as to make the conjugate relationship of equal magnification. At this juncture, the two diffraction lights 14a and 14b on the surface of the moving object 7 form spots of approximately 2 mm diameter.

Even when the diffraction angle $\theta_1$ formed by the diffraction lights $\pm$n order from the diffraction grating 10 is changed into a diffraction angle $\theta_1'$ due to the fluctuation of the wavelength $\lambda$ of the laser light, the diffraction lights of the $\pm$n order incident on the lens group 11L form an image on the surface at the position 11a (a position at which the image height is slightly different from the position corresponding to the diffraction angle $\theta_1$ and are subsequently diverged and made by the lens group 12L to be the parallel beams to be irradiated onto the surface of the moving object 7 at the angle $\theta_1'$, Then, at this time, the two beams are formed to maintain the state in which their spots are overlapped with each other thereon.

The condenser lens 8 converges on the detecting surface 9a of the photodetector 9 the scattering rays of light having the frequency affected by the Doppler shift, $\Delta$f and - $\Delta$f, which are proportional to the traveling velocity V of the moving object 7 and are expressed by the equation (1). At this time, the two scattering rays of light affected by the Doppler shift $\Delta$f and - $\Delta$f interfere with each other on the detection surface 9a. The photodetector 9 detects the luminous energy based on the luminous intensity of the interference fringe thus produced. In other words, the photodetector 9 detects the Doppler signals which do not depend on the wavelength $\lambda$ of the laser 1 having the Doppler frequency F,

$$F = 2V/d \tag{10}$$

which is proportional to the traveling velocity V in the equation (8) where n = 1. Then, by the operation of the computing means (not shown), the traveling velocity V is obtained by the equation (10) using the output signals from the photodetector 9.

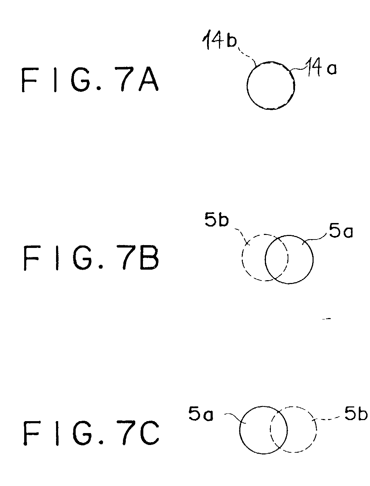

For example, in the system shown in Fig. 4, if the oscillating wavelength of the laser 1 fluctuates, the spots of the two diffracted lights 5a and 5b are becoming deviated, not overlapped with each other on the surface of the moving object 7, for example as shown in Fig. 7B and Fig. 7C. The scattering rays of light detected by the photodetector 9 are those from the area where the two spot diameters 5a and 5b are overlapped. Therefore, if the two spot diameters 5a and 5b are not overlapped but are being deviated, the detecting amount of the scattering rays of light for the detection of the photodetector 9 is decreased. As a result, the S/N ratio of the Doppler signal is lowered, and there is a possibility that the measurement precision for the traveling velocity V is degraded.

To counteract this in the present embodiment, each element is arranged as has been described to enable that the two spots of the two light beams 14a and 14b intersect such that they substantially overlap with each other on the surface of the moving object 7 without fail as shown in Fig. 7A. Thus, the S/N ratio of the Doppler signals obtained by the photodetector 9 is maintained in an excellent condition to make a high-precision detection of the traveling velocity V of the moving object 7 possible.

Also, since a < b, the distance b becomes comparatively long, whereby the working distance becomes greater. Hence, there is more freedom obtainable in installing the velocimeter.

In the present embodiment, although the transmission type diffraction grating is shown, a reflection type diffractions grating may also be employed as well.

In the embodiment set forth above, the diffraction light of $\pm$ primary order is used, but a diffraction light of the second order or more may also be applied in addition thereto.

Further, it may be possible to input the laser light 3 into the diffraction grating 10 at a specific angle, not necessarily the incident angle perpendicular thereto. In this case, two diffraction lights of $\pm$n order diffraction light should be irradiated onto the moving object while the same intersecting angle as the intersecting angle formed by the two diffraction lights of the $\pm$n order diffraction light from the diffraction grating 10 is being maintained.

As far as a beam emitted from a same light source is used and provided that at least one of the two diffraction lights irradiated onto the moving object is an n order diffraction light, the other diffraction light can be any order other than the n order, such as 0, n+1, n+2, or the like.

It may be possible to obtain the Doppler signals in such as manner that one of the beams, emitted from a same light source to be inputted into light receiving elements, is irradiated onto a moving object as an n order diffraction light, while the other one of them is directly incident on the light receiving elements, not through the moving object, to interfere with the scattering rays of light from the moving object.

There is a method of moving the diffraction grating toward the grating arrangement direction in order to apply a bias to the Doppler signal for detecting the velocity in the vicinity of zero and the traveling direction. In this case, it is possible to obtain the same effect if the optical construction is formed in the same way as shown in Fig. 6. Also, it may be possible to employ an acoustic-optical element instead of the method of moving the refraction grating toward the grating arrangement direction.

In the descriptions of the embodiment according to the present invention, a single-piece thin lens is represented as the lens to be applied, however, it is possible to use a single-piece thick lens as a matter of course. In such a case, the distance between the principal plane of an image of the front lens 11L and the principal plane of an object of the rear lens 12L should be established to be substantially 2f (two times the focal distance). Similarly, when the lenses 11L and 12L are constructed by lens groups, i.e., equivalent lens system comprising a plurality of lenses, the distance between the principal plane of image of the lens group 11L and the principal plane of object of the lens group 12L should be substantially 2f. The description in the present application hereof, which refers to as being set apart from each other substantially two times of the focal distance, includes those mentioned above as a matter of course.

Also, in this case, a reference mark "a" should designate the distance between the principal plane of object of the lens (group) 11L and the diffraction grating 10 and a reference mark "b" should designate the distance between the principal plane of image of the lens (group) 12L and the measuring point.

## Claims

1. An apparatus for detecting an information of the displacement of an object (7), including:

    light source means (1);
    optical means (10, 11L, 12L) for irradiating a beam from said light source onto the object (7), which comprises a diffraction grating (10) for diffracting a beam (3) from said light source (1), and a first lens or lens group (11L) and a second lens or lens group (12L), the distance between the first lens or lens group (11L) and the second lens or lens group (12L) being substantially equal to the sum of the focal distance of said first lens or lens group (11L) and of the focal distance of said second lens or lens group (12L) along a direction of the optical axis, wherein at least one beam (5a, 13a, 14a; 5b, 13b, 14b) diffracted by said diffraction grating (10) is irradiated onto said object (7) through said first lens or lens group (11L) and said second lens or lens group (12L); and detecting means (9) for detecting a light from the object (7) to which said beam (5a, 13a, 14a; 5b, 13b, 14b) has been irradiated by means of said optical means (10, 11L, 12L) whereby the information of the displacement of the object (7) is detected by said detecting means;

    characterized

    in that said first lens or lens group (11L) and said second lens or lens group (12L) each have the same focal distance (f); in that the sum of the distance (a) from said diffraction grating (10) to said first lens or lens group (11L) and the distance (b) from said object (7) to said second lens or lens group (12L) is made equal to two times said focal distance; and
    in that the distance (a) from said diffraction grating (10) to said first lens or lens group (11L) is smaller than the distance (b) from the object (7) to said second lens or lens group (12L).

2. An apparatus according to Claim 1, wherein said optical means (10, 11L, 12L) is arranged so as to intersect ±n order diffraction lights (5a, 13a, 14a; 5b, 13b, 14b) from said diffraction grating (10) through said two lenses or lens groups (11L, 12L) on the object (7), where n is an arbitrary natural number.

3. An apparatus according to Claim 1, wherein said detecting means (9) detects scattered rays of light from the object (7) and outputs Doppler frequency signals in response to a velocity of the object (7), the velocity of the object being detected from said Doppler frequency signals.

4. An apparatus according to one of claims 1 to 3, characterized in that the beam (3) from said light source means (1) is incident on said diffraction grating (10) as collimated light.

5. A method for detecting an information of the displacement of an object (7), including the steps of:

    irradiation of a beam onto the object (7) using a diffraction grating (10) for diffracting a beam (3) and a first lens or lens group (11L) and a second lens or lens group (12L), the distance between the first lens or lens group (11L) and the second lens or lens group (12L) being substantially equal to the sum of the focal distance of said first lens or lens group (11L) and of the focal distance of said second lens or lens group (12L) along a direction of the optical axis;
    wherein at least one beam (5a, 13a, 14a; 5b, 13b, 14b) diffracted by said diffraction grating (10) is irradiated onto said object (7) through said first lens or lens group (11L) and said second lens or lens group (12L); and
    detection of a light from the object (7) to which said beam (5a, 13a, 14a; 5b, 13b, 14b) has been irradiated by means of said optical means (10, 16), whereby the information of the displacement of the object (7) is detected by said detection;

characterized in that
said first lens or lens group (11L) and said second lens or lens group (12L) each have the same focal distance (f);
in that the sum of the distance (a) from said diffraction grating (10) to said first lens or lens group (11L) and the
distance (b) from said object to said second lens or lens group (12L) is made equal to two times said focal distance
and in that the distance (a) from said diffraction grating (10) to said first lens or lens group (11L) is made smaller
than the distance (b) from the object (7) to said second lens or lens group (12L).

6. A method according to Claim 5, wherein said irradiation is performed by intersecting ±n order diffraction lights (5a,
13a, 14a; 5b, 13b, 14b) from said diffraction grating (10) through said two lenses or lens groups (11L, 12L) on the
object (7), where n is an arbitrary natural number.

7. A method according to Claim 5, wherein said detection is performed by receiving scattered rays of light from the
object (7) and outputting Doppler frequency signals in response to the velocity of the object (7), the velocity of the
object (7) being detected from said Doppler frequency signals.

8. A method according to one of claims 5 to 7, wherein said beam (3) which is diffracted by said diffraction grating
(10) is irradiated onto said diffraction grating (10) in a collimated state.

**Patentansprüche**

1. Vorrichtung zum Erfassen von Information über die Verschiebung eines Objektes (7), umfassend:

   Lichtquelleneinrichtungen (1);
   eine optische Einrichtung (10, 11L, 12L) zum Einstrahlen eines Strahls von der Lichtquelle auf das Objekt (7),
   die ein Beugungsgitter (10) zum Beugen eines Strahls (3) von der Lichtquelle (1) und eine erste Linse oder
   Linsengruppe (11L) und eine zweite Linse oder Linsengruppe (12L) umfaßt, wobei der Abstand zwischen der
   ersten Linse oder Linsengruppe (11L) und der zweiten Linse oder Linsengruppe (12L) im wesentlichen gleich
   der Summe aus der Brennweite der ersten Linse oder Linsengruppe (11L) und der Brennweite der zweiten
   Linse oder Linsengruppe (12L) entlang der Richtung der optischen Achse ist;
   wobei mindestens ein Strahl (5a, 13a, 14a; 5b, 13b, 14b), der von dem Beugungsgitter (10) gebeugt worden
   ist, auf das Objekt (7) durch die erste Linse oder Linsengruppe (11L) und die zweite Linse oder Linsengruppe
   (12L) eingestrahlt wird; und
   Nachweiseinrichtungen (9) zum Nachweisen eines Lichtstrahls von dem Objekt (7), auf das der Strahl (5a,
   13a, 14a; 5b, 13b, 14b) durch die optische Einrichtung (10, 11L, 12L) eingestrahlt worden ist, wodurch die
   Verschiebungsinformation des Objekts (7) durch die Nachweiseinrichtung erfaßt wird;

   **dadurch gekennzeichnet, daß**

   die erste Linse oder Linsengruppe (11L) und die zweite Linse oder Linsengruppe (12L) jeweils dieselbe Brennweite (f) haben;
   die Summe aus dem Abstand (a) von dem Beugungsgitter (10) zu der ersten Linse oder Linsengruppe (11L)
   und dem Abstand (b) von dem Objekt (7) zu der zweiten Linse oder Linsengruppe (12L) gleich dem zweifachen
   der Brennweite gemacht ist; und
   der Abstand (a) von dem Beugungsgitter (10) zu der ersten Linse oder Linsengruppe (11L) kleiner als der
   Abstand (b) von dem Objekt (7) zu der zweiten Linse oder Linsengruppe (12L) ist.

2. Vorrichtung nach Anspruch 1, wobei die optische Einrichtung (10, 11L, 12L) so angeordnet ist, daß sich Beugungslichtstrahlen ± n. Ordnung (5a, 13a, 14a; 5b, 13b, 14b) von dem Beugungsgitter (10) durch die zwei Linsen oder
   Linsengruppen (11L, 12L) auf dem Objekt (7) schneiden, wobei n eine beliebige natürliche Zahl ist.

3. Vorrichtung nach Anspruch 1, wobei die Nachweiseinrichtung (9) gestreute Lichtstrahlen von dem Objekt (7) nachweist und Doppler-Frequenzsignale in Wechselwirkung mit einer Geschwindigkeit des Objekts (7) ausgibt, wobei
   die Geschwindigkeit des Objekts aus den Doppler-Frequenzsignalen erfaßt wird.

4. Vorrichtung nach einem der Ansprüche 1 bis 3,
   **dadurch gekennzeichnet, daß**
   der Strahl (3) von der Lichtquelleneinrichtung (1) auf das Beugungsgitter (10) als parallel gerichtetes Licht einfällt.

**5.** Verfahren zum Erfassen von Information über die Verschiebung eines Objektes (7), umfassend die Schritte zum:

Einstrahlen eines Strahls auf das Objekt (7) unter Verwendung eines Beugungsgitters (10) zum Beugen eines Strahls (3) und einer ersten Linse oder Linsengruppe (11L) und einer zweiten Linse oder Linsengruppe (12L), wobei der Abstand zwischen der ersten Linse oder Linsengruppe (11L) und der zweiten Linse oder Linsengruppe (12L) im wesentlichen gleich der Summe aus der Brennweite der ersten Linse oder Linsengruppe (11L) und der Brennweite der zweiten Linse oder Linsengruppe (12L) entlang der Richtung der optischen Achse ist; wobei mindestens ein Strahl (5a, 13a, 14a; 5b, 13b, 14b), der von dem Beugungsgitter (10) gebeugt worden ist, auf das Objekt (7) durch die erste Linse oder Linsengruppe (11L) und die zweite Linse oder Linsengruppe (12L) eingestrahlt wird; und
Nachweisen eines Lichtstrahls von dem Objekt (7), auf das der Strahl (5a, 13a, 14a; 5b, 13b, 14b) durch die optische Einrichtung (10, 11L, 12L) eingestrahlt worden ist, wodurch die Verschiebungsinformation des Objekts (7) durch die Nachweiseinrichtung erfaßt wird;

**dadurch gekennzeichnet, daß**

die erste Linse oder Linsengruppe (11L) und die zweite Linse oder Linsengruppe (12L) jeweils dieselbe Brennweite (f) haben;
die Summe aus dem Abstand (a) von dem Beugungsgitter (10) zu der ersten Linse oder Linsengruppe (11L) und dem Abstand (b) von dem Objekt (7) zu der zweiten Linse oder Linsengruppe (12L) gleich dem zweifachen der Brennweite gemacht wird; und
der Abstand (a) von dem Beugungsgitter (10) zu der ersten Linse oder Linsengruppe (11L) kleiner als der Abstand (b) von dem Objekt (7) zu der zweiten Linse oder Linsengruppe (12L) gemacht wird.

**6.** Verfahren nach Anspruch 5, wobei die Bestrahlung durch Schneiden der Beugungsstrahlen (5a, 13a, 14a; 5b, 13b, 14b) ± n. Ordnung von dem Beugungsgitter (10) durch die zwei Linsen oder Linsengruppen (11L, 12L) auf dem Objekt (7) durchgeführt wird, wobei n eine beliebige natürliche Zahl ist.

**7.** Verfahren nach Anspruch 5, wobei der Nachweis durch das Empfangen gestreuter Lichtstrahlen von dem Objekt (7) und das Ausgeben von Doppler-Frequenzsignalen in Wechselwirkung mit der Geschwindigkeit des Objekts durchgeführt wird, wobei die Geschwindigkeit des Objekts von den Doppler-Frequenzsignalen erfaßt wird.

**8.** Verfahren nach einem der Ansprüche 5 bis 7, wobei der Strahl (3), der durch das Beugungsgitter (10) gebeugt wird, auf das Beugungsgitter (10) in einem parallel gerichteten Zustand eingestrahlt wird.

**Revendications**

**1.** Appareil pour détecter une information de déplacement d'un objet (7) comportant:

des moyens (1) à source lumineuse;
des moyens (10, 11L, 12L) optiques pour projeter un faisceau de ladite source lumineuse sur l'objet (7), qui comprennent un réseau (10) de diffraction pour diffracter un faisceau (3) provenant de ladite source (1) lumineuse, et une première lentille ou un premier groupe (11L) de lentilles, et une seconde lentille ou un second groupe (12L) de lentilles, la distance entre la première lentille ou le premier groupe (11L) de lentilles et la seconde lentille ou le second groupe (11L) de lentilles étant sensiblement égale à la somme de la distance focale de ladite première lentille ou dudit premier groupe (11L) de lentilles et de la distance focale de ladite seconde lentille ou dudit second groupe (12L) de lentilles suivant la direction de l'axe optique;
dans lequel au moins un faisceau (5a, 13a, 14a; 5b, 13b, 14b) diffracté par ledit réseau (10) de diffraction est projeté sur ledit objet (7) à travers ladite première lentille ou ledit premier groupe (11L) de lentilles et ladite seconde lentille ou ledit second groupe (12L) de lentilles; et
des moyens (9) de détection pour détecter une lumière provenant de l'objet (7) vers lequel ledit faisceau (5a, 13a, 14a; 5b, 13b, 14b) a été projeté à l'aide desdits moyens (10, 11L, 12L) optiques, de façon que l'information de déplacement de l'objet (7) soit détectée par lesdits moyens de détection;

caractérisé

en ce que ladite première lentille ou ledit premier groupe (11L) de lentilles et ladite seconde lentille ou ledit second groupe (12L) de lentilles ont chacun la même distance focale (f);

en ce que la somme de la distance (a) dudit réseau (10) de diffraction à ladite première lentille ou audit premier groupe (11L) de lentilles, et de la distance (b) dudit objet (7) à ladite seconde lentille ou audit second groupe (12L) de lentilles, est rendue égale à deux fois ladite distance focale; et

en ce que la distance (a) dudit réseau (10) de diffraction à ladite première lentille ou audit premier groupe (11L) de lentilles est inférieure à la distance (b) de l'objet (7) à ladite seconde lentille ou audit second groupe (12L) de lentilles.

2. Appareil selon la revendication 1, dans lequel lesdits moyens (10, 11L, 12L) optiques sont conçus pour intercepter des lumières (5a, 13a, 14a; 5b, 13b, 14b) de diffraction d'ordre ±n provenant dudit réseau (10) de diffraction à travers lesdites deux lentilles ou lesdits deux groupes (11L, 12L) de lentilles sur l'objet (7), n étant un nombre naturel quelconque.

3. Appareil selon la revendication 1, dans lequel lesdits moyens (9) de détection détectent des rayons de lumière diffusés par l'objet (7) et fournissent en sortie des signaux de fréquence Doppler en réponse à une vitesse de l'objet (7), la vitesse de l'objet étant détectée à partir desdits signaux de fréquence Doppler.

4. Appareil selon l'une des revendications 1 à 3, caractérisé en ce que le faisceau (3) provenant desdits moyens (1) à source lumineuse est incident sur ledit réseau (10) de diffraction sous forme de lumière collimatée.

5. Procédé pour détecter une information de déplacement d'un objet (7), comprenant les étapes qui consistent:

à projeter un faisceau sur l'objet (7) en utilisant un réseau (10) de diffraction pour diffracter un faisceau (3) et une première lentille ou un premier groupe (11L) de lentilles, et une seconde lentille ou un second groupe (12L) de lentilles, la distance entre la première lentille ou le premier groupe (11L) de lentilles et la seconde lentille ou le second groupe (12L) de lentilles étant sensiblement égale à la somme de la distance focale de ladite première lentille ou dudit premier groupe (11L) de lentilles et de la distance focale de ladite seconde lentille ou dudit second groupe (12L) de lentilles suivant la direction de l'axe optique;

dans lequel au moins un faisceau (5a, 13a, 14a; 5b, 13b, 14b) diffracté par ledit réseau (10) de diffraction est projeté sur ledit objet (7) à travers ladite première lentille ou ledit premier groupe (11L) de lentilles et ladite seconde lentille ou ledit second groupe (12L) de lentilles; et

à détecter une lumière provenant de l'objet (7) vers lequel ledit faisceau (5a, 13a, 14a; 5b, 13b, 14b) a été projeté à l'aide desdits moyens (10, 16) optiques, de façon que l'information de déplacement de l'objet (7) soit détectée par ladite détection;

caractérisé

en ce que ladite première lentille ou ledit premier groupe (11L) de lentilles et ladite seconde lentille ou ledit second groupe (12L) de lentilles ont chacun la même distance focale (f);

en ce que la somme de la distance (a) dudit réseau (10) de diffraction à ladite première lentille ou audit premier groupe (11L) de lentilles, et de la distance (b) dudit objet à ladite seconde lentille ou audit second groupe (12L) de lentilles est rendue égale à deux fois ladite distance focale; et

en ce que la distance (a) dudit réseau (10) de diffraction à ladite première lentille ou audit premier groupe (11L) de lentilles est rendue inférieure à la distance (b) de l'objet (7) à ladite seconde lentille ou audit second groupe (12L) de lentilles.

6. Procédé selon la revendication 5, dans lequel ladite exposition est effectuée par interception de lumières (5a, 13a, 14a; 5b, 13b, 14b) de diffraction d'ordre ±n provenant dudit réseau (10) de diffraction et passant à travers lesdites deux lentilles ou lesdits deux groupes (11L, 12L) de lentilles sur l'objet (7), n étant un nombre naturel quelconque.

7. Procédé selon la revendication 5, dans lequel ladite détection est effectuée par réception de rayons de lumière diffusés par l'objet (7), et par fourniture en sortie de signaux de fréquence Doppler en réponse à la vitesse de l'objet (7), la vitesse de l'objet (7) étant détectée à partir desdits signaux de fréquence Doppler.

8. Procédé selon l'une quelconque des revendications 5 à 7, dans lequel ledit faisceau (3) qui est diffracté par ledit réseau (10) de diffraction est projeté sur ledit réseau (10) de diffraction à l'état collimaté.

# F I G. 1

# F I G. 2

# F I G. 3

# F I G. 4

# F I G. 5

# FIG.6

EP 0 458 274 B1

FIG. 7A

FIG. 7B

FIG. 7C